# FASCICULE DE BREVET EUROPEEN

(11) **EP 3 557 474 B1**
(45) Date de publication et mention de la délivrance du brevet: **23.12.2020**
(21) Numéro de dépôt: 19168600.5
(22) Date de dépôt: 11.04.2019
(51) Int. Cl.: G06K 7/10, G06K 19/07

(54) **PROCÉDÉ DE CONTRÔLE D'ACCÈS SÉCURISÉ AVEC MODES DE FONCTIONNEMENT COURTE PORTÉE ET MOYENNE OU LONGUE PORTÉE**
KONTROLLVERFAHREN DES GESICHERTEN ZUGANGS MIT BETRIEBSMODI KURZER UND MITTLERER ODER LANGER REICHWEITE
METHOD FOR CONTROLLING SECURE ACCESS WITH SHORT-RANGE AND MEDIUM- OR LONG-RANGE OPERATING MODES

(30) Priorité: 17.04.2018 FR 1853355
(43) Date de publication de la demande: 23.10.2019
(73) Titulaire: Systemes Et Technologies Identification, 13850 Greasque (FR)
(72) Inventeur: DUPART, Vincent, 83470 SAINT-MAXIMIN-LA-SAINTE-BEAUME (FR); SILVE, Jérôme, 13790 ROUSSET (FR); POITRAT, Sylvain, 13850 GREASQUE (FR)
(74) Mandataire: Chevalier, Renaud Philippe

(56) Documents cités:
- EP-A1- 2 833 653
- WO-A1-2016/198780
- CN-A- 103 561 480
- KR-A- 20170 121 645

## Description

Dans le domaine du contrôle d'accès, il est connu d'employer des lecteurs de contrôle d'accès sécurisé comprenant une puce de radio-identification active afin de permettre un contrôle d'accès sans contact et à courte-distance selon la technologie RFID, généralement au moyen de badges munis d'une puce de radio-identification passive.

Il est également connu d'employer, à la place de tels badges, des terminaux mobiles du type terminal téléphonique (ou smartphone) mettant en œuvre une radiocommunication sécurisée avec le lecteur de contrôle d'accès sécurisé selon un protocole de communication sans fil moyenne ou longue portée du type BLUETOOTH®.

Cependant, la portée d'une telle radiocommunication entre le terminal téléphonique et le lecteur de contrôle d'accès présente un inconvénient majeur lorsque plusieurs lecteurs de contrôle d'accès se situent dans le champ de portée du terminal téléphonique, avec des risques de conflit soulevant des failles de sécurité.

Pour résoudre cet inconvénient, il a été proposé dans le document WO 2016/198780 A1 d'employer un procédé de contrôle d'accès sécurisé mettant en œuvre une évaluation de la puissance en réception (ou RSSI pour « Received Signal Strength Indication ») lors d'une telle communication sans fil moyenne ou longue portée.

Bien qu'avantageuse, ce procédé présente un premier inconvénient qui est que, si le terminal téléphonique est proche du lecteur, il existe des problèmes liés aux différents modèles de terminaux téléphoniques intégrant différents types de puces de radiocommunication moyenne ou longue portée notamment en BLUETOOTH®, de sorte que la gestion des seuils de puissance en réception est complexe et peut créer des fonctionnements non désirés.

Un autre inconvénient tient aux temps de latence liés aux protocoles de communication sans fil moyenne ou longue portée notamment en BLUETOOTH®. Si ces temps de latence ne sont pas pénalisants à moyenne et longue distance (car le temps d'approche du terminal téléphonique vers le lecteur permet de couvrir cette latence), ils sont par contre dommageables à courte distance, c'est-à-dire en-deçà de 1 mètre.

La présente invention a pour but de résoudre cet inconvénient, en proposant un procédé de contrôle d'accès sécurisé adapté pour des radiocommunications sécurisées et qui soit fiable et rapide autant à moyenne distance qu'à courte distance.

Un autre but de l'invention est de proposer un procédé de contrôle d'accès sécurisé adapté à différents modèles de terminaux mobiles ou terminaux téléphoniques, et en particulier à différents types de puces de radiocommunication moyenne ou longue portée notamment en BLUETOOTH®.

A cet effet, elle propose un procédé de contrôle d'accès sécurisé utilisant :
- un lecteur, de type lecteur de contrôle d'accès sécurisé, comprenant un module de contrôle en liaison avec une unité de traitement distante, et comprenant en outre un premier module de radiocommunication présentant une première portée et un deuxième module de radiocommunication présentant une deuxième portée inférieure à la première portée ;
- au moins un terminal mobile de radiocommunication porté par un utilisateur, où ce terminal mobile comprend :
   - une première puce de radiocommunication apte à établir un premier canal de radiocommunication avec le premier module de radiocommunication du lecteur si ledit terminal mobile se situe à une distance du lecteur inférieure à la première portée, et
   - une deuxième puce de radiocommunication apte à établir un deuxième canal de radiocommunication avec le deuxième module de radiocommunication si ledit terminal mobile se situe à une distance du lecteur inférieure à la deuxième portée ;
      où ce procédé de contrôle d'accès sécurisé comprend une phase d'authentification au cours de laquelle le terminal mobile communique au module de contrôle du lecteur des données d'identification authentifiées propres au terminal mobile et à destination de l'unité de traitement distante ;
      et où ce procédé de contrôle d'accès sécurisé met en œuvre au moins deux modes de fonctionnement :
         - un premier mode de fonctionnement dans lequel le terminal mobile se situe à une distance du lecteur inférieure à la première portée et supérieure à la deuxième portée, et dans lequel la première puce de radiocommunication du terminal mobile établit une radiocommunication dans le premier canal de radiocommunication avec le premier module de radiocommunication du lecteur pour échanger des données d'identification dans ce premier canal de radiocommunication entre le terminal mobile et le module de contrôle du lecteur au cours de ou à la suite de la phase d'authentification ; et
         - un deuxième mode de fonctionnement dans lequel le terminal mobile se situe à une distance du lecteur inférieure à la deuxième portée, et dans lequel la deuxième puce de radiocommunication du terminal mobile établit prioritairement et automatiquement une radiocommunication dans le deuxième canal de radiocommunication avec le deuxième module de radiocommunication du lecteur pour échanger des données d'identification dans ce deuxième canal de radiocommunication entre le terminal mobile et le module de contrôle du lecteur au cours de ou à la suite de la phase d'authentification, où ce deuxième canal de radiocommunication est sélectionné automatiquement et de manière prioritaire par le terminal mobile pour cette radiocommunication par rapport au premier canal de radiocommunication.

De cette manière, à courte distance, le deuxième mode de fonctionnement prend le pas sur le premier mode de fonctionnement, autrement dit le deuxième canal de radiocommunication est prioritaire sur le premier canal de radiocommunication, de sorte que les inconvénients du premier canal de radiocommunication (latence, seuils variables de puissance en réception) n'ont pas à être gérés à courte distance, tout en maintenant ce premier canal de radiocommunication à moyenne ou longue distance dans le premier mode de fonctionnement.

Il est à noter que la première portée du premier module de radiocommunication correspond à la distance maximale au-delà de laquelle la première puce de radiocommunication du terminal mobile ne peut pas établir le premier canal de radiocommunication. De même, la deuxième portée du deuxième module de radiocommunication correspond à la distance maximale au-delà de laquelle la deuxième puce de radiocommunication du terminal mobile ne peut pas établir le deuxième canal de radiocommunication.

Dans le cadre de l'invention, il y a donc trois possibilités selon la distance entre le lecteur et le terminal mobile :
- si la distance est supérieure à la première portée (portée la plus haute), alors il n'est pas possible d'établir le premier canal de radiocommunication et le deuxième canal de radiocommunication ;
- si la distance est supérieure à la deuxième portée (portée la plus basse) et inférieure ou égale à la première portée, alors il s'établit le premier canal de radiocommunication dans le cadre du premier mode de fonctionnement, et il n'est pas possible d'établir le deuxième canal de radiocommunication car la distance est trop grande ;
- si la distance est inférieure ou égale à la deuxième portée, alors il est possible d'établir le premier canal de radiocommunication et aussi le deuxième canal de radiocommunication, cependant le deuxième canal de radiocommunication s'établit de manière prioritaire dans le cadre du deuxième mode de fonctionnement.

Selon une caractéristique, dans le premier mode de fonctionnement, la première puce de radiocommunication du terminal mobile établit la radiocommunication dans le premier canal de radiocommunication avec le premier module de radiocommunication du lecteur à la condition où l'utilisateur a effectué préalablement une action d'accès sur le terminal mobile ou sur le lecteur, cette action d'accès réveillant la première puce de radiocommunication du terminal mobile ou le premier module de radiocommunication du lecteur pour initier la communication dans ledit premier canal de radiocommunication.

Dans une première réalisation, une action d'accès correspond à une approche, avec ou sans contact, de l'utilisateur, notamment d'une main de l'utilisateur, à proximité d'un système de détection de présence intégré au lecteur, cette approche réveillant le premier module de radiocommunication du lecteur pour initier la communication dans le premier canal de radiocommunication.

Avantageusement, le système de détection de présence correspond à un capteur capacitif intégré au lecteur.

Dans une deuxième réalisation, une action d'accès correspond à une action sur le terminal mobile réveillant la première puce de radiocommunication du terminal mobile pour initier la communication dans le premier canal de radiocommunication, ladite action sur le terminal mobile étant choisie parmi l'une au moins des actions suivantes :
- une pression sur un écran tactile du terminal mobile, notamment de manière ponctuelle, maintenue ou selon une trajectoire prédéfinie ;
- une pression sur un bouton du terminal mobile ;
- un mouvement prédéfini d'impact sur le terminal mobile détecté par un accéléromètre intégré au terminal mobile ;
- un mouvement prédéfini de déplacement du terminal mobile détecté par un accéléromètre intégré au terminal mobile ;
- une action de déverrouillage du terminal mobile afin de lui faire quitter un mode veille.

Selon une autre caractéristique, l'établissement de la communication dans le deuxième canal de radiocommunication inhibe la communication dans le premier canal de radiocommunication.

Selon une possibilité de l'invention, la première puce de radiocommunication du terminal mobile et le premier module de radiocommunication du lecteur fonctionnement selon un protocole de communication sans fil moyenne ou longue portée avec une première portée supérieure à 1 mètre, et notamment comprise entre 1 et 30 mètres.

Dans un mode de réalisation particulier, le protocole de communication sans fil moyenne distance est choisi parmi l'un des types de protocoles suivants : BLUETOOTH®, WIFI®, WIBREE®, WIMAX®, LORA®, ZIGBEE®.

Bien entendu, l'invention ne saurait être limitée à ses exemples de protocoles de communication sans fil moyenne ou longue portée.

Selon une autre possibilité de l'invention, la deuxième puce de radiocommunication du terminal mobile et le deuxième module de radiocommunication du lecteur fonctionnement selon un protocole de communication sans fil courte portée avec une deuxième portée de 50 centimètres au maximum, et notamment de l'ordre de 1 à 15 centimètres.

Dans un mode de réalisation particulier, le protocole de communication sans fil courte portée est un protocole de communication en champ proche ou NFC®.

Conformément à une autre caractéristique de l'invention, le terminal mobile est un terminal téléphonique, tel qu'un téléphone intelligent ou « smartphone ».

Bien entendu, l'invention ne saurait être limitée à un terminal téléphonique et peut être envisagée avec tout type de terminal mobile répondant aux caractéristiques précitées, et notamment un terminal mobile se présentant sous la forme d'un porte-clés, ou badge, ou autre objet communicant.

La présente invention concerne également la caractéristique selon laquelle le lecteur comprend également au moins un système complémentaire de contrôle d'accès choisi dans la liste comprenant :
- un dispositif de contrôle biométrique afin de permettre un contrôle complémentaire d'accès par biométrie ;
- un dispositif de prise d'image afin de permettre un contrôle complémentaire d'accès par reconnaissance faciale ;
- un clavier afin de permettre un contrôle complémentaire d'accès par saisie d'un code.

D'autres caractéristiques et avantages de la présente invention apparaîtront à la lecture de la description détaillée ci-après, d'un exemple de mise en œuvre non limitatif, faite en référence aux figures annexées dans lesquelles :
- la figure 1 est une vue schématique d'un lecteur et d'un terminal mobile adapté pour mise en œuvre d'un procédé de contrôle d'accès sécurisé selon l'invention ; et
- les figures 2 à 5 illustrent différentes situations et étapes lors de la mise en œuvre d'un procédé de contrôle d'accès sécurisé conforme à l'invention.

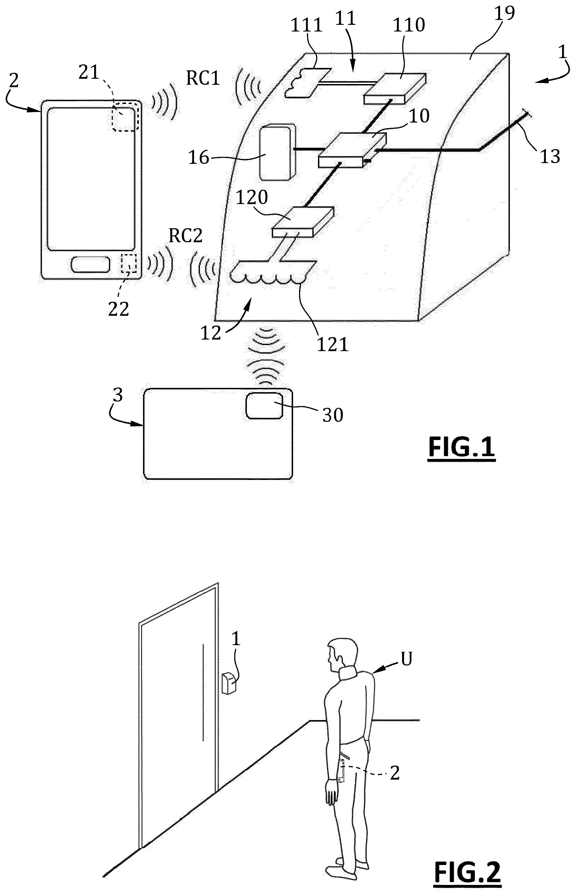

En référence à la figure 1, le procédé conforme à l'invention est mis en œuvre avec au moins un lecteur 1 de contrôle d'accès sécurisé et au moins un terminal mobile 2 de radiocommunication porté par un utilisateur.

Le lecteur 1 comprend un boîtier 19 pourvu de moyens de fixation sur un support (non illustré), généralement un support vertical tel qu'un mur ou une cloison.

Ce lecteur 1 comprend, à l'intérieur de ce boîtier 19 :
- un module de contrôle 10 notamment du type contrôleur ou processeur ;
- un premier module de radiocommunication 11 comprenant une première puce de radiocommunication 110 reliée à une antenne 111 et connectée au module de contrôle 10 ; et
- un deuxième module de radiocommunication 12 comprenant une deuxième puce de radiocommunication 120 reliée à une antenne 121 et connectée au module de contrôle 10.

Le module de contrôle 10 est en liaison avec une unité de traitement distante (non illustrée) via une liaison qui est :
- soit une liaison filaire par bus, au moyen d'un câble de communication 13, afin de permettre la transmission filaire (pilotée par le module de contrôle 10) de données d'identification à l'unité de traitement distante ;
- soit une liaison non filaire au moyen d'un module de radiocommunication sans fil associé à une antenne, afin de permettre la transmission sans fil (pilotée par le module de contrôle 10) de données d'identification à l'unité de traitement distante.

Le lecteur 1 et ses différents composants électroniques internes peuvent être alimentés électriquement par un branchement sur secteur et/ou au moyen d'une batterie électrique, rechargeable ou non.

Le premier module de radiocommunication 11 présente une première portée qui sera qualifiée de moyenne ou longue portée et qui est supérieure à 1 mètre, et qui est notamment comprise entre 1 et 30 mètres.

Ce premier module de radiocommunication 11 fonctionne selon l'un des protocoles de communication sans fil moyenne ou longue portée suivants, donnés à titre d'exemples non limitatifs : BLUETOOTH®, WIFI®, WIBREE®, WIMAX®, LORA®, ZIGBEE®.

Le deuxième module de radiocommunication 12 présente une seconde portée qui sera qualifiée de courte portée, qui est inférieure à la première portée, qui est inférieure à 50 centimètres en étant notamment comprise entre 1 et 15 centimètres.

Ce deuxième module de radiocommunication 12 fonctionne selon un protocole de communication sans fil courte portée de type protocole de communication en champ proche ou NFC®.

Le lecteur 1 peut également intégrer, à l'intérieur du boîtier 19, un système de détection de présence 16, notamment du type capteur capacitif, raccordée au module de contrôle 10.

Le terminal mobile 2 est un terminal téléphonique, du type téléphone intelligent ou « smartphone », mais pourrait également être, à titre d'exemples non limitatifs, une tablette numérique ou un assistant numérique personnel ou un badge d'accès ou un porte-clés répondant aux caractéristiques précitées.

Ce terminal mobile 2 intègre, outre une batterie et une carte ou puce électronique (non illustrés) :
- une première puce de radiocommunication 21 reliée à une antenne (non illustrée) et apte à établir un premier canal de radiocommunication RC1 avec le premier module de radiocommunication 11 du lecteur 1 si le terminal mobile 2 se situe à une distance du lecteur 1 inférieure à la première portée ;
- un deuxième puce de radiocommunication 22 reliée à une antenne (non illustrée) et apte à établir un deuxième canal de radiocommunication RC2 avec le deuxième module de radiocommunication 12 si ledit terminal mobile 2 se situe à une distance du lecteur 1 inférieure à la deuxième portée.

La première puce de radiocommunication 21 fonctionne dans la même technologie ou le même protocole de communication sans fil moyenne ou longue portée que le premier module de radiocommunication 11, à savoir, à titre d'exemples non limitatifs : BLUETOOTH®, WIFI®, WIBREE®, WIMAX®, LORA®, ZIGBEE®.

La deuxième puce de radiocommunication 22 fonctionne dans la même technologie ou le même protocole de communication sans fil courte portée que le deuxième module de radiocommunication 12, à savoir en communication en champ proche ou NFC®.

Le procédé de contrôle d'accès sécurisé comprend une phase d'authentification au cours de laquelle le terminal mobile communique au module de contrôle du lecteur des données d'identification et à l'issue de laquelle le module de contrôle 10 du lecteur 1 transmet des données d'identification authentifiées propres au terminal mobile 2 à destination de l'unité de traitement distante.

Cette phase d'authentification peut être du type à authentification simple ou mutuelle.

A titre d'exemple, lors d'une authentification simple, le terminal mobile 2 et le lecteur 1 proche entrent en radiocommunication sécurisée (soit avec une première radiocommunication RC1 soit avec une deuxième radiocommunication RC2) et successivement :
- le lecteur 1 communique au terminal mobile 2 son propre identifiant (comme par exemple un numéro de série) ;
- le terminal mobile 2 calcule une signature à partir de cet identifiant du lecteur 1 et également à partir des données d'identification du terminal mobile 2;
- le terminal mobile 2 transmet au lecteur 1 ses données d'identification ainsi que cette signature ;
- le module de contrôle 10 du lecteur 1 vérifie avec la signature l'authenticité des données d'identification, avant de transmettre des données d'identification authentifiées à l'unité de traitement distante.

Le module de contrôle 10 du lecteur 1 peut authentifier les données d'identification avec la clé publique d'une paire de clés publique/privée, cette clé publique étant stockée dans une mémoire, de préférence une mémoire sécurisée, associée au module de contrôle 10.

L'unité de traitement récupérera ensuite ces données d'identification à des fins de traitement et de décision d'une ou plusieurs actions, telles que par exemple déverrouiller un accès, lancer une alerte, actionner un système domotique, historier des informations de passage, etc.

Avant d'engager une telle phase d'authentification, le procédé de contrôle d'accès sécurisé fonctionne selon l'un ou l'autre du premier mode de fonctionnement et du deuxième mode de fonctionnement décrits ci-après, selon la distance entre le terminal mobile 2 et le lecteur 1.

Le premier mode de fonctionnement, qui correspond à un fonctionnement moyenne ou longue distance, est mis en œuvre lorsque le terminal mobile 2 se situe à une distance du lecteur 1 inférieure à la première portée et supérieure à la deuxième portée, et dans ce cas la première puce de radiocommunication 21 du terminal mobile 2 établit une radiocommunication dans le premier canal de radiocommunication RC1 avec le premier module de radiocommunication 11 du lecteur 1, établissant ainsi une radiocommunication entre le lecteur 1 et le terminal mobile 2 dans ce premier canal de radiocommunication RC1 pour échanger des données d'identification au cours de ou à la suite de la phase d'authentification.

Sur la figure 2, l'utilisateur U, et donc le terminal mobile 2, sont situés à une distance du lecteur 1 inférieure à la première portée et supérieure à la deuxième portée. Cependant, la radiocommunication dans le premier canal de radiocommunication RC1 n'est pas encore établie entre le lecteur 1 et le terminal mobile 2.

En effet, dans le premier mode de fonctionnement, la première puce de radiocommunication 21 du terminal mobile 2 établit la radiocommunication dans le premier canal de radiocommunication RC1 avec le premier module de radiocommunication 11 du lecteur 1 à la condition où l'utilisateur U a effectué préalablement une action d'accès sur le terminal mobile 2 ou sur le lecteur 1, cette action d'accès réveillant la première puce de radiocommunication 21 du terminal mobile 2 ou le premier module de radiocommunication 11 du lecteur 1 pour initier cette communication dans le premier canal de radiocommunication RC1.

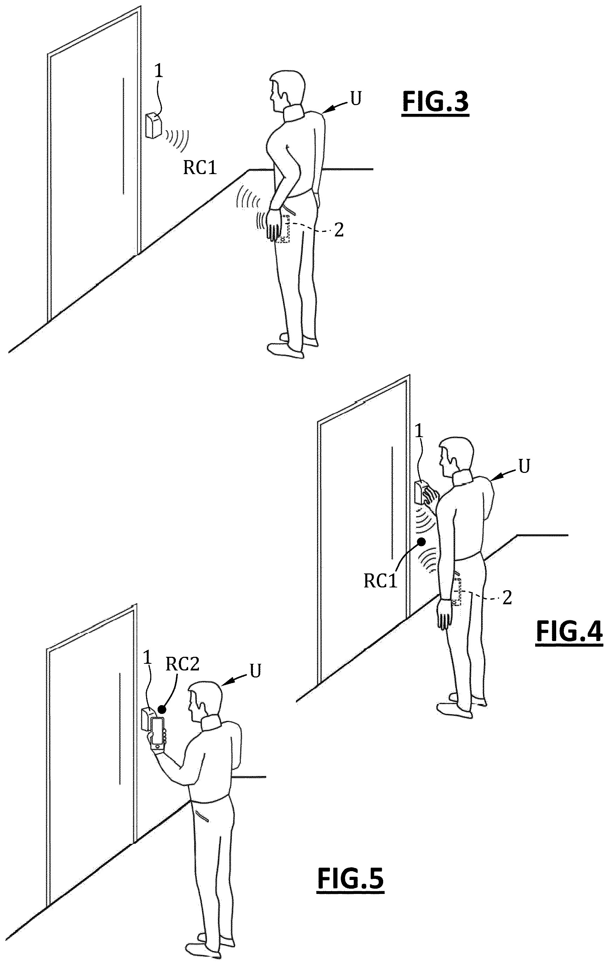

Dans l'exemple de la figure 3, l'utilisateur U effectue une action d'accès qui correspond à une action sur le terminal mobile 2 réveillant la première puce de radiocommunication 21 du terminal mobile 2 pour initier la communication dans le premier canal de radiocommunication RC1, où cette action sur le terminal mobile 2 correspond à un mouvement prédéfini d'impact sur le terminal mobile 2 détecté par un accéléromètre intégré au terminal mobile 2, autrement dit un mouvement au cours duquel le terminal mobile 2 subit au moins un impact ou choc, de préférence de faible amplitude pour éviter d'endommager le terminal mobile 2.

Concernant le type de mouvement d'impact, il peut par exemple s'agir d'un mouvement au cours duquel l'utilisateur U applique une succession d'au moins deux coups consécutifs portés sur le terminal mobile 2.

Comme visible sur la figure 3, le terminal mobile 2 peut rester dans une poche de vêtement (ou dans un sac) durant ce mouvement d'impact. Ce mouvement d'impact peut être détecté alors que le terminal mobile 2 est en mode veille. Le terminal mobile 2 traduit cette détection d'un impact ou d'une succession d'impacts par l'accéléromètre en un réveil de la première puce de radiocommunication 21 propre à permettre d'établir la communication dans le premier canal de radiocommunication RC1.

Dans l'exemple de la figure 4, l'utilisateur U s'est rapproché du lecteur 1, mais la distance entre le terminal mobile 2 et le lecteur 1 reste supérieure à la deuxième portée (en l'occurrence le terminal mobile 2 reste dans une proche de vêtement ou dans un sac). Dans cet exemple, l'utilisateur U effectue une action d'accès qui correspond à une approche, avec ou sans contact, d'une main à proximité du lecteur 1 et plus spécifiquement du système de détection de présence 16, cette approche détectée par le système de détection de présence 16 réveillant le premier module de radiocommunication 11 du lecteur 1 pour initier la communication dans le premier canal de radiocommunication RC1.

Comme visible sur la figure 4, le terminal mobile 2 peut rester dans une poche de vêtement (ou dans un sac) durant ce mouvement d'approche de la main. Le module de contrôle 10 du lecteur 1 traduit cette détection de l'approche ou de la présence de la main par le système de détection de présence 16, en un réveil du premier module de radiocommunication 11 propre à permettre d'établir la communication dans le premier canal de radiocommunication RC1.

Le deuxième mode de fonctionnement, qui correspond à un fonctionnement courte distance, est mis en œuvre lorsque le terminal mobile 2 se situe à une distance du lecteur 1 inférieure à la deuxième portée, et dans ce cas la deuxième puce de radiocommunication 22 du terminal mobile 2 établit prioritairement et automatiquement une radiocommunication dans le deuxième canal de radiocommunication RC2 avec le deuxième module de radiocommunication 12 du lecteur 1, établissant ainsi une radiocommunication entre le lecteur 1 et le terminal mobile 2 dans ce deuxième canal de radiocommunication RC2 pour échanger des données d'identification au cours de ou à la suite de la phase d'authentification.

Ce deuxième canal de radiocommunication RC2 est donc sélectionné automatiquement et de manière prioritaire par le terminal mobile 2 par rapport au premier canal de radiocommunication RC1, pour réaliser la radiocommunication entre le lecteur 1 et le terminal mobile 2 au cours de ou à la suite de la phase d'authentification, de sorte que l'établissement du deuxième canal de radiocommunication RC2 inhibe le premier canal de radiocommunication RC1 et seul le deuxième canal de radiocommunication RC2 est employé pour que le lecteur 1 et le terminal mobile 2 puissent échanger des données et notamment des données d'identification au cours de ou à la suite de la phase d'authentification.

Dans l'exemple de la figure 5, l'utilisateur U a sorti son terminal mobile 2 de sa poche de vêtement (ou de son sac) afin de le placer sur le lecteur 1, établissant ainsi automatiquement le deuxième mode de fonctionnement autrement dit la radiocommunication dans le deuxième canal de radiocommunication RC2 prioritaire.

Bien entendu, ce deuxième mode de fonctionnement s'établit si le terminal mobile 2 est équipé d'une deuxième puce de radiocommunication 22 et si cette deuxième puce de radiocommunication 22 est activée.

Par contre, si le terminal mobile 2 n'est pas équipé d'une deuxième puce de radiocommunication 22, ou si le terminal mobile 2 est équipé d'une deuxième puce de radiocommunication 22 mais que celle-ci n'est pas activée, alors le deuxième mode de fonctionnement ne pourra pas être établi et le procédé mettra en œuvre le premier mode de fonctionnement à la fois à courte distance et à moyenne ou longue distance.

Dans le cadre du procédé, il est envisageable que le deuxième mode de fonctionnement soit accessible :
- soit manuellement parce que l'utilisateur choisit le deuxième canal de radiocommunication ;
- soit automatiquement pour assurer les meilleures performances en distance et en temps de traitement.

Il est à noter que le lecteur 1 peut également permettre un contrôle complémentaire d'accès selon la technologie RFID au moyen d'un badge d'accès 3 muni d'une puce de radio-identification passive 30, où cette puce de radio-identification passive 30 sera détectée par l'antenne 121 du deuxième module de radiocommunication 12.

Comme indiqué précédemment, le lecteur 1 peut également intégrer au moins un système complémentaire de contrôle d'accès choisi dans la liste comprenant :
- un dispositif de contrôle biométrique afin de permettre un contrôle complémentaire d'accès par biométrie, notamment par contrôle d'empreinte digitale, de rétine ou d'iris ;
- un dispositif de prise d'image, tel qu'une caméra numérique, afin de permettre un contrôle complémentaire d'accès par reconnaissance faciale.
- un clavier afin de permettre un contrôle complémentaire d'accès par saisie d'un code.

Ainsi, un autre utilisateur, non détenteur d'un terminal mobile 2 adapté pour la mise en œuvre du procédé décrit précédemment, peut obtenir l'accès au moyen d'un tel système complémentaire de contrôle d'accès.

Dans l'exemple de la figure 1, cet autre utilisateur peut détenir un badge d'accès 3 muni d'une puce RFID passive 30 qui communique avec la puce de radio-identification active 14 intégrée au lecteur 1, en vue d'obtenir l'accès.

## Revendications

1. Procédé de contrôle d'accès sécurisé utilisant :
- un lecteur (1), de type lecteur de contrôle d'accès sécurisé, comprenant un module de contrôle (10) en liaison avec une unité de traitement distante, et comprenant en outre un premier module de radiocommunication (11) présentant une première portée et un deuxième module de radiocommunication (12) présentant une deuxième portée inférieure à la première portée ;
- au moins un terminal mobile (2) de radiocommunication porté par un utilisateur (U), où ledit terminal mobile (2) comprend :
- une première puce de radiocommunication (21) apte à établir un premier canal de radiocommunication (RC1) avec le premier module de radiocommunication (11) du lecteur (1) si ledit terminal mobile (2) se situe à une distance du lecteur (1) inférieure à la première portée, et
- une deuxième puce de radiocommunication (22) apte à établir un deuxième canal de radiocommunication (RC2) avec le deuxième module de radiocommunication (12) si ledit terminal mobile (2) se situe à une distance du lecteur (1) inférieure à la deuxième portée ;
ledit procédé de contrôle d'accès sécurisé comprenant une phase d'authentification au cours de laquelle le terminal mobile (2) communique au module de contrôle (10) du lecteur (1) des données d'identification authentifiées propres audit terminal mobile (2) et à destination de l'unité de traitement distante ;
ledit procédé de contrôle d'accès sécurisé mettant en œuvre au moins deux modes de fonctionnement :
- un premier mode de fonctionnement dans lequel le terminal mobile (2) se situe à une distance du lecteur (1) inférieure à la première portée et supérieure à la deuxième portée, et dans lequel la première puce de radiocommunication (21) du terminal mobile (2) établit une radiocommunication dans le premier canal de radiocommunication (RC1) avec le premier module de radiocommunication (11) du lecteur (1) pour échanger des données d'identification dans ce premier canal de radiocommunication (RC1) entre le terminal mobile (2) et le module de contrôle (10) du lecteur (1) au cours de ou à la suite de la phase d'authentification ; et
- un deuxième mode de fonctionnement dans lequel le terminal mobile (2) se situe à une distance du lecteur (1) inférieure à la deuxième portée, et dans lequel la deuxième puce de radiocommunication (22) du terminal mobile (2) établit prioritairement et automatiquement une radiocommunication dans le deuxième canal de radiocommunication (RC2) avec le deuxième module de radiocommunication (12) du lecteur (1) pour échanger des données d'identification dans ce deuxième canal de radiocommunication (RC2) entre le terminal mobile (2) et le module de contrôle (10) du lecteur (1) au cours de ou à la suite de la phase d'authentification, où ce deuxième canal de radiocommunication (RC2) est sélectionné automatiquement et de manière prioritaire par le terminal mobile (2) pour cette radiocommunication par rapport au premier canal de radiocommunication (RC1).

2. Procédé de contrôle d'accès sécurisé selon la revendication 1, dans lequel, dans le premier mode de fonctionnement, la première puce de radiocommunication (21) du terminal mobile (2) établit la radiocommunication dans le premier canal de radiocommunication (RC1) avec le premier module de radiocommunication (11) du lecteur (1) à la condition où l'utilisateur a effectué préalablement une action d'accès sur le terminal mobile (2) ou sur le lecteur (1), ladite action d'accès réveillant la première puce de radiocommunication (21) du terminal mobile (2) ou le premier module de radiocommunication (11) du lecteur (1) pour initier la communication dans ledit premier canal de radiocommunication (RC1).

3. Procédé de contrôle d'accès sécurisé selon la revendication 2, dans lequel une action d'accès correspond à une approche, avec ou sans contact, de l'utilisateur (U), notamment d'une main de l'utilisateur (U), à proximité d'un système de détection de présence (16) intégré au lecteur (1), ladite approche réveillant le premier module de radiocommunication (11) du lecteur (1) pour initier la communication dans le premier canal de radiocommunication (RC1).

4. Procédé de contrôle d'accès sécurisé selon la revendication 3, dans lequel le système de détection de présence (16) correspond à un capteur capacitif intégré au lecteur (1).

5. Procédé de contrôle d'accès sécurisé selon la revendication 2, dans lequel une action d'accès correspond à une action sur le terminal mobile (2) réveillant la première puce de radiocommunication (21) du terminal mobile (2) pour initier la communication dans le premier canal de radiocommunication (RC1), ladite action sur le terminal mobile (2) étant choisie parmi l'une au moins des actions suivantes :
- une pression sur un écran tactile du terminal mobile (2), notamment de manière ponctuelle, maintenue ou selon une trajectoire prédéfinie ;
- une pression sur un bouton du terminal mobile (2) ;
- un mouvement prédéfini d'impact sur le terminal mobile (2) détecté par un accéléromètre intégré au terminal mobile (2) ;
- un mouvement prédéfini de déplacement du terminal mobile (2) détecté par un accéléromètre intégré au terminal mobile (2) ;
- une action de déverrouillage du terminal mobile (2) afin de lui faire quitter un mode veille.

6. Procédé de contrôle d'accès sécurisé selon l'une quelconque des revendications précédentes, dans lequel l'établissement de la communication dans le deuxième canal de radiocommunication (RC2) inhibe la communication dans le premier canal de radiocommunication (RC1).

7. Procédé de contrôle d'accès sécurisé selon l'une quelconque des revendications précédentes, dans lequel la première puce de radiocommunication (21) du terminal mobile (2) et le premier module de radiocommunication (11) du lecteur (1) fonctionnement selon un protocole de communication sans fil moyenne ou longue portée avec une première portée supérieure à 1 mètre, et notamment comprise entre 1 et 30 mètres.

8. Procédé de contrôle d'accès sécurisé selon la revendication précédente, dans lequel le protocole de communication sans fil moyenne distance est choisi parmi l'un des types de protocoles suivants : BLUETOOTH®, WIFI®, WIBREE®, WIMAX®, LORA®, ZIGBEE®.

9. Procédé de contrôle d'accès sécurisé selon l'une quelconque des revendications précédentes, dans lequel la deuxième puce de radiocommunication (22) du terminal mobile (2) et le deuxième module de radiocommunication (12) du lecteur (1) fonctionnent selon un protocole de communication sans fil courte portée avec une deuxième portée de 50 centimètres au maximum, et notamment de l'ordre de 1 à 15 centimètres.

10. Procédé de contrôle d'accès sécurisé selon la revendication précédente, dans lequel le protocole de communication sans fil courte portée est un protocole de communication en champ proche ou NFC®.

11. Procédé de contrôle d'accès sécurisé selon l'une quelconque des revendications précédentes, dans lequel le terminal mobile (2) est un terminal téléphonique.

12. Procédé de contrôle d'accès sécurisé selon l'une quelconque des revendications précédentes, dans lequel le lecteur (1) comprend également au moins un système complémentaire de contrôle d'accès choisi dans la liste comprenant :
- un dispositif de contrôle biométrique afin de permettre un contrôle complémentaire d'accès par biométrie ;
- un dispositif de prise d'image afin de permettre un contrôle complémentaire d'accès par reconnaissance faciale ;
- un clavier afin de permettre un contrôle complémentaire d'accès par saisie d'un code.

## Patentansprüche

1. Sicheres Zugangskontrollverfahren, verwendend:
- ein Lesegerät (1) vom sicheren Zugangskontrolllesegerät-Typ, umfassend ein Steuermodul (10) in Verbindung mit einer entfernten Verarbeitungseinheit, und weiterhin umfassend ein erstes Radiokommunikationsmodul (11), aufweisend eine erste Reichweite, und ein zweites Radiokommunikationsmodul (12), aufweisend eine zweite Reichweite, die kleiner als die erste Reichweite ist;
- mindestens ein mobiles Radiokommunikationsendgerät (2), das von einem Benutzer (U) getragen wird, wobei das mobile Endgerät (2) umfasst:
- einen ersten Radiokommunikationschip (21), der dazu geeignet ist, einen ersten Radiokommunikationskanal (RC1) mit dem ersten Radiokommunikationsmodul (11) des Lesegeräts (1) herzustellen, wenn das mobile Endgerät (2) sich in einer Entfernung von dem Lesegerät (1) befindet, die kleiner als die erste Reichweite ist, und
- einen zweiten Radiokommunikationschip (22), der dazu geeignet ist, einen zweiten Radiokommunikationskanal (RC2) mit dem zweiten Radiokommunikationsmodul (12) herzustellen, wenn das mobile Endgerät (2) sich in einer Entfernung von dem Lesegerät (1) befindet, die kleiner als die zweite Reichweite ist;
wobei das sichere Zugangskontrollverfahren eine Authentifizierungsphase umfasst, während der das mobile Endgerät (2) authentifizierte Identifizierungsdaten, die dem mobilen Endgerät (2) eigen sind, an das Steuermodul (10) des Lesegeräts (1) und mit dem Ziel der entfernten Verarbeitungseinheit kommuniziert;
wobei das sichere Zugangskontrollverfahren mindestens zwei Betriebsmodi umsetzt:
- einen ersten Betriebsmodus, in dem das mobile Endgerät (2) sich in einer Entfernung von dem Lesegerät (1) befindet, die kleiner als die erste Reichweite ist und größer als die zweite Reichweite ist, und in der der erste Radiokommunikationschip (21) des mobilen Endgeräts (2) eine Radiokommunikation in dem ersten Radiokommunikationskanal (RC1) mit dem ersten Radiokommunikationsmodul (11) des Lesegeräts (1) herstellt, um Identifizierungsdaten in diesem ersten Radiokommunikationskanal (RC1) zwischen dem mobilen Endgerät (2) und dem Steuermodul (10) des Lesegeräts (1) während oder nach der Authentifizierungsphase auszutauschen; und
- einen zweiten Betriebsmodus, in dem das mobile Endgerät (2) sich in einer Entfernung von dem Lesegerät (1) befindet, die kleiner als die zweite Reichweite ist, und in der der zweite Radiokommunikationschip (22) des mobilen Endgeräts (2) vorrangig und automatisch eine Radiokommunikation in dem zweiten Radiokommunikationskanal (RC2) mit dem zweiten Radiokommunikationsmodul (12) des Lesegeräts (1) herstellt, um Identifizierungsdaten in diesem zweiten Radiokommunikationskanal (RC2) zwischen dem mobilen Endgerät (2) und dem Steuermodul (10) des Lesegeräts (1) während oder nach der Authentifizierungsphase auszutauschen, wobei dieser zweite Radiokommunikationskanal (RC2) automatisch und auf vorrangige Weise von dem mobilen Endgerät (2) für diese Radiokommunikation in Bezug auf den ersten Radiokommunikationskanal (RC1) ausgewählt wird.

2. Sicheres Zugangskontrollverfahren nach Anspruch 1, in dem im ersten Betriebsmodus der erste Radiokommunikationschip (21) des mobilen Endgeräts (2) die Radiokommunikation in dem ersten Radiokommunikationskanal (RC1) mit dem ersten Radiokommunikationsmodul (11) des Lesegeräts (1) unter der Bedingung herstellt, dass der Benutzer zuvor eine Zugangsaktion auf dem mobilen Endgerät (2) oder auf dem Lesegerät (1) durchgeführt hat, wobei die Zugangsaktion den ersten Radiokommunikationschip (21) des mobilen Endgeräts (2) oder das erste Radiokommunikationsmodul (11) des Lesegeräts (1) aufweckt, um die Kommunikation in dem ersten Radiokommunikationskanal (RC1) zu initiieren.

3. Sicheres Zugangskontrollverfahren nach Anspruch 2, in dem eine Zugangsaktion einer Annäherung, mit oder ohne Kontakt, des Benutzers (U), insbesondere einer Hand des Benutzers (U), an die Umgebung eines Anwesenheitserkennungssystems (16), das in das Lesegerät (1) integriert ist, entspricht, wobei die Annäherung das erste Radiokommunikationsmodul (11) des Lesegeräts (1) aufweckt, um die Kommunikation in dem ersten Radiokommunikationskanal (RC1) zu initiieren.

4. Sicheres Zugangskontrollverfahren nach Anspruch 3, in dem das Anwesenheitserkennungssystem (16) einem kapazitiven Sensor entspricht, der in das Lesegerät (1) integriert ist.

5. Sicheres Zugangskontrollverfahren nach Anspruch 2, in dem eine Zugangsaktion einer Aktion auf dem mobilen Endgerät (2) entspricht, die den ersten Radiokommunikationschip (21) des mobilen Endgeräts (2) aufweckt, um die Kommunikation in dem ersten Radiokommunikationskanal (RC1) zu initiieren, wobei die Aktion auf dem mobilen Endgerät (2) aus mindestens einer der folgenden Aktionen ausgewählt ist:
- einem Drücken auf einen Berührungsbildschirm des mobilen Endgeräts (2), insbesondere auf punktuelle oder gehaltene Weise oder gemäß einem vorherdefinierten Weg;
- einem Drücken auf eine Taste des mobilen Endgeräts (2);
- einer vorherdefinierten Schlagbewegung auf das mobile Endgerät (2), die von einem Beschleunigungsmesser erkannt wird, der in das mobile Endgerät (2) integriert ist;
- einer vorherdefinierten Bewegung zur Verlagerung des mobilen Endgeräts (2), die von einem Beschleunigungsmesser erkannt wird, der in das mobile Endgerät (2) integriert ist;
- einer Aktion zur Entsperrung des mobilen Endgeräts (2), damit es einen Schlafmodus verlässt.

6. Sicheres Zugangskontrollverfahren nach einem der vorhergehenden Ansprüche, in dem die Herstellung der Kommunikation in dem zweiten Radiokommunikationskanal (RC2) die Kommunikation in dem ersten Radiokommunikationskanal (RC1) stört.

7. Sicheres Zugangskontrollverfahren nach einem der vorhergehenden Ansprüche, in dem der erste Radiokommunikationschip (21) des mobilen Endgeräts (2) und das erste Radiokommunikationsmodul (11) des Lesegeräts (1) gemäß einem drahtlosen Kommunikationsprotokoll mit mittlerer oder langer Reichweite arbeiten, wobei eine erste Reichweite größer als 1 Meter ist und insbesondere zwischen 1 und 30 Meter liegt.

8. Sicheres Zugangskontrollverfahren nach dem vorhergehenden Anspruch, in dem das drahtlose Kommunikationsprotokoll mit mittlerer oder langer Reichweite aus einem der folgenden Typen von Protokollen ausgewählt ist: BLUETOOTH®, WIFI®, WIBREE®, WIMAX®, LORA®, ZIGBEE®.

9. Sicheres Zugangskontrollverfahren nach einem der vorhergehenden Ansprüche, in dem der zweite Radiokommunikationschip (22) des mobilen Endgeräts (2) und das zweite Radiokommunikationsmodul (12) des Lesegeräts (1) gemäß einem drahtlosen Kommunikationsprotokoll mit kurzer Reichweite arbeiten, wobei eine zweite Reichweite höchstens 50 Zentimeter und insbesondere in der Größenordnung von 1 bis 15 Zentimeter ist.

10. Sicheres Zugangskontrollverfahren nach dem vorhergehenden Anspruch, in dem das drahtlose Kommunikationsprotokoll mit kurzer Reichweite ein Nahfeldkommunikationsprotokoll oder NFC® ist.

11. Sicheres Zugangskontrollverfahren nach einem der vorhergehenden Ansprüche, in dem das mobile Endgerät (2) ein Telefon-Endgerät ist.

12. Sicheres Zugangskontrollverfahren nach einem der vorhergehenden Ansprüche, in dem das Lesegerät (1) außerdem mindestens ein komplementäres Zugangskontrollsystem umfasst, das aus der Liste ausgewählt ist, umfassend:
- eine biometrische Kontrollvorrichtung, um eine komplementäre Zugangskontrolle mittels Biometrie zu ermöglichen;
- eine Bildaufnahmevorrichtung, um eine komplementäre Zugangskontrolle mittels Gesichtserkennung zu ermöglichen;
- eine Tastatur, um eine komplementäre Zugangskontrolle mittels Eingabe eines Codes zu ermöglichen.

## Claims

1. A secure access control method using:
- a reader (1), of the secure access control reader type, comprising a control module (10) in connection with a remote processing unit, and further comprising a first radiocommunication module (11) having a first range and a second radiocommunication module (12) having a second range less than the first range;
- at least one radiocommunication mobile terminal (2) carried by a user (U), where said mobile terminal (2) comprises:
- a first radiocommunication chip (21) capable of establishing a first radiocommunication channel (RC1) with the first radiocommunication module (11) of the reader (1) if said mobile terminal (2) is located at a distance from the reader (1) less than the first range, and
- a second radiocommunication chip (22) capable of establishing a second radiocommunication channel (RC2) with the second radiocommunication module (12) if said mobile terminal (2) is located at a distance from the reader (1) less than the second range;
said secure access control method comprising an authentication phase during which the mobile terminal (2) communicates to the control module (10) of the reader (1) authenticated identification data specific to said mobile terminal (2) and towards the remote processing unit;
said secure access control method implementing at least two modes of operation:
- a first mode of operation wherein the mobile terminal (2) is located at a distance from the reader (1) less than the first range and greater than the second range, and wherein the first radiocommunication chip (21) of the mobile terminal (2) establishes a radiocommunication in the first radiocommunication channel (RC1) with the first radiocommunication module (11) of the reader (1) in order to exchange identification data in this first radiocommunication channel (RC1) between the mobile terminal (2) and the control module (10) of the reader (1) during or subsequently to the authentication phase; and
- a second mode of operation wherein the mobile terminal (2) is located at a distance from the reader (1) less than the second range, and wherein the second radiocommunication chip (22) of the mobile terminal (2) establishes as a priority and automatically a radiocommunication in the second radiocommunication channel (RC2) with the second radiocommunication module (12) of the reader (1) in order to exchange identification data in this second radiocommunication channel (RC2) between the mobile terminal (2) and the control module (10) of the reader (1) during or subsequently to the authentication phase, where this second radiocommunication channel (RC2) is selected automatically and as a matter of priority by the mobile terminal (2) for this radiocommunication over the first radiocommunication channel (RC1).

2. The secure access control method according to claim 1, wherein, in the first mode of operation, the first radiocommunication chip (21) of the mobile terminal (2) establishes the radiocommunication in the first radiocommunication channel (RC1) with the first radiocommunication module (11) of the reader (1) on the condition that the user has previously performed an action of access on the mobile terminal (2) or on the reader (1), said action of access waking up the first radiocommunication chip (21) of the mobile terminal (2) or the first radiocommunication module (11) of the reader (1) in order to initiate communication in said first radiocommunication channel (RC1).

3. The secure access control method according to claim 2, wherein an action of access corresponds to an approach, with or without contact, of the user (U), in particular of a hand of the user (U), in the proximity of a presence detection system (16) integrated into the reader (1), said approach waking up the first radiocommunication module (11) of the reader (1) in order to initiate communication in the first radiocommunication channel (RC1).

4. The secure access control method according to claim 3, wherein the presence detection system (16) corresponds to a capacitive sensor integrated into the reader (1).

5. The secure access control method according to claim 2, wherein an action of access corresponds to an action on the mobile terminal (2) waking up the first radiocommunication chip (21) of the mobile terminal (2) in order to initiate communication in the first radiocommunication channel (RC1), said action on the mobile terminal (2) being selected from at least one of the following actions:
- a pressure maintained or in a predefined path, on a touch screen of the mobile terminal (2), in particular in a punctual manner;
- a pressure on a button of the mobile terminal (2);
- a predefined impact movement on the mobile terminal (2) detected by an accelerometer integrated into the mobile terminal (2);
- a predefined movement of displacement of the mobile terminal (2) detected by an accelerometer integrated into the mobile terminal (2);
- an action of unlocking the mobile terminal (2) in order to make it exit a standby mode.

6. The secure access control method according to any one of the preceding claims, wherein establishing communication in the second radiocommunication channel (RC2) inhibits the communication in the first radiocommunication channel (RC1).

7. The secure access control method according to any one of the preceding claims, wherein the first radiocommunication chip (21) of the mobile terminal (2) and the first radiocommunication module (11) of the reader (1) operate according to a medium or long-range wireless communication protocol with a first range greater than 1 meter, and in particular comprised between 1 and 30 meters.

8. The secure access control method according to the preceding claim, wherein the medium-distance wireless communication protocol is selected from one of the following types of protocols: BLUETOOTH®, WIFI®, WIBREE®, WIMAX®, LORA@, ZIGBEE®.

9. The secure access control method according to any one of the preceding claims, wherein the second radiocommunication chip (22) of the mobile terminal (2) and the second radiocommunication module (12) of the reader (1) operate according to a short-range wireless communication protocol with a second range of 50 centimeters at most, and in particular in the order of 1 to 15 centimeters.

10. The secure access control method according to the preceding claim, wherein the short-range wireless communication protocol is a near field communication protocol or NFC® protocol.

11. The secure access control method according to any one of the preceding claims, wherein the mobile terminal (2) is a phone terminal.

12. The secure access control method according to any one of the preceding claims, wherein the reader (1) also comprises at least one complementary access control system selected from the list comprising:
- a biometric control device in order to allow a complementary access control by biometrics;
- an image capture device in order to allow a complementary access control by facial recognition;
- a keyboard in order to allow a complementary access control by entering a code.
